# EUROPÄISCHE PATENTSCHRIFT

(11) **EP 1 730 748 B1**
(45) Veröffentlichungstag und Bekanntmachung des Hinweises auf die Patenterteilung: **12.09.2007**
(21) Anmeldenummer: 05715677.0
(22) Anmeldetag: 03.03.2005
(51) Int. Cl.: G21C 3/322, G21C 5/06

(54) **BRENNELEMENT FÜR EINEN SIEDEWASSERREAKTOR**
FUEL ELEMENT FOR A BOILING-WATER REACTOR
ELEMENT COMBUSTIBLE POUR UN REACTEUR BOUILLANT

(30) Priorität: 02.04.2004 DE 102004016263
(43) Veröffentlichungstag der Anmeldung: 13.12.2006
(73) Patentinhaber: AREVA NP GmbH, 91058 Erlangen (DE)
(72) Erfinder: LIEBLER-RANZUS, Michael, 91560 Heilsbronn (DE); FRIEDRICH, Erhard, 90542 Eckental (DE)
(74) Vertreter: Mörtel, Alfred
(86) Internationale Anmeldenummer: PCT/EP2005/002213
(87) Internationale Veröffentlichungsnummer: WO 2005/098356

(56) Entgegenhaltungen:
- EP-A- 1 280 163
- US-A- 5 289 514
- US-B1- 6 226 343

## Beschreibung

Die Erfindung betrifft ein Brennelement für einen Siedewasserreaktor. Ein solches Brennelement umfasst ein Bündel von mit Kernbrennstoff gefüllten Brennstäben, welche von mehreren Abstandhaltern axial gehalten sind. Etwa zentral im Brennstabbündel verläuft ein Wasserkanal, dessen unteres Ende einen von einer Bohrung durchsetzten Stopfen trägt. Mit Hilfe dieses Stopfens ist der Wasserkanal am Brennelementfuß fixiert. Der Brennelementfuß selbst bzw. zumindest ein Teil davon ist von einem Rahmenteil gebildet, das eine Siebplatte umfasst. Bei einem aus EP 1 280 163 A1 bekannten Brennelement ist in der Siebplatte eine Bohrung enthalten, in die von der Unterseite der Siebplatte her eine Gewindehülse eingesteckt und dort verlötet ist. Eine solche Verlötung erfordert einen erhöhten Fertigungsaufwand und ist zum anderen hinsichtlich Dauerfestigkeit während des Einsatzes in einem Kernreaktor problematisch.

Aufgabe der Erfindung ist es, ein Brennelement für einen Siedewasserreaktor anzugeben, bei dem der Brennelementfuß auf eine alternative Weise mit dem Wasserkanal verbunden ist.

Diese Aufgabe wird durch ein Brennelement nach Anspruch 1 gelöst. Danach ist an der Unterseite des am unteren Ende des Wasserkanals angeordneten Stopfens eine Schürze angeformt, die sich in eine die Siebplatte durchsetzende Öffnung drehfest hineinerstreckt. Weiterhin ist eine Buchse vorgesehen, die einen ersten und einen zweiten Längsabschnitt aufweist, wobei der zweite Längsabschnitt von der Unterseite der Siebplatte her in deren Öffnung drehfest hineinragt und wobei eine zwischen den beiden Längsabschnitten vorhandene Radialschulter mit ihrer Außenseite an der Unterseite der Siebplatte anliegt. Die Buchse schließlich ist von dem Gewindebolzen einer Schraube durchgriffen, welche in ein Gewinde der Bohrung des Stopfens eingreift. Vorteil der beschriebenen Verbindung ist, dass sie völlig ohne die aufwendige Herstellung von Schweiß- oder Lötnähten auskommt und daher zum einen eine hohe Dauerfestigkeit aufweist und zum anderen einen geringeren Montageaufwand erfordert. Durch den drehfesten Eingriff der Schürze in die Öffnung der Siebplatte ist eine Veränderung der Drehlage zwischen Wasserkanal und Brennelementfuß ausgeschlossen. Vorzugsweise ist die drehfeste Verbindung dadurch bewerkstelligt, dass die Schürze eine polygone Umrissform besitzt und ein die Schürze umfassender Bereich der Siebplatten-Öffnung eine dazu komplementäre Querschnittsfläche aufweist.

Bei einer bevorzugten Ausführungsform liegen die einander zugewandten Stirnseiten des zweiten Längsabschnitts und der Schürze aneinander, wobei die Längen von Buchse und Schürze so bemessen sind, dass zwischen der Unterseite des Stopfens und der Oberseite der Siebplatte ein Spalt vorhanden ist. Dadurch wird die zu einer festen Schraubverbindung notwendige Vorspannung des Schraubenbolzens durch eine Verspannung zwischen der Buchse und dem Stopfen erreicht. Die Siebplatte bleibt dabei frei von jeglicher Krafteinleitung in Axialrichtung. Dies ist dann von Vorteil, wenn die Siebplatte von in dieser Richtung nachgiebigen Elementen, etwa von parallel zueinander angeordneten Stegen gebildet wird, welche eine in Axialrichtung verlaufende Krümmung aufweisen. Bei einer Kraftbeaufschlagung in Axialrichtung besteht hier die Gefahr, dass die Stege nachgeben und dadurch die Schraubverbindung an Festigkeit verliert.

Durch die vorgeschlagene Ausgestaltung ist dies jedoch wirksam verhindert.

Um zu verhindern, dass sich die Schraube selbsttätig löst, ist die Buchse drehfest in der Öffnung der Siebplatte angeordnet und die Schraube drehfest mit der Buchse verbunden. Bei einer bevorzugten Ausgestaltung ist dies dadurch bewerkstelligt, dass der zweite Längsabschnitt der Buchse eine polygone Umrissform besitzt und ein die Buchse umfassender Bereich der Siebplattenöffnung eine dazu komplementäre Querschnittsfläche aufweist. Vorzugsweise ist die Drehsicherung zwischen Buchse und Schraube so ausgestaltet, dass ein Umfangsbereich des ersten Längsabschnitts der Buchse durch eine radial nach innen gerichtete plastische Verformung drehmomentschlüssig mit dem Kopf der Buchse zusammenwirkt.

Eine quer zur Axialrichtung spielfrei und insbesondere verkippsichere Fixierung des Wasserkanals am Brennelementfuß wird dadurch erreicht, dass der Gewindebolzen einen sich vom Schraubenkopf wegerstreckenden vorzugsweise gewindefreien Längsabschnitt aufweist, der mit seiner Außenumfangsfläche an der Innenfläche der Buchse anliegt.

Die Erfindung wird nun anhand von in den beigefügten Zeichnungen dargestellten Ausführungsbeispielen näher erläutert. Es zeigen:
Fig. 1 ein Brennelement eines Siedewasserreaktors in perspektivischer Darstellung,
Fig. 2 eine perspektivische Explosionsdarstellung, die die Fixierung eines Wasserkanals an einem Brennelementfuß verdeutlicht,
Fig. 3 einen Brennelementfuß in Querschnittsdarstellung,
Fig. 4 eine Draufsicht in Richtung des Pfeils IV in Fig. 3,
Fig. 5 den Ausschnitt V aus Fig. 3,
Fig. 6 den Ausschnitt VI aus Fig. 5,
Fig. 7 eine perspektivische Explosionsdarstellung eines zweiten Ausführungsbeispieles,
Fig. 8 einen Querschnitt durch den Brennelementfuß im Montagezustand,
Fig. 9 das Teil IX aus Fig. 8.

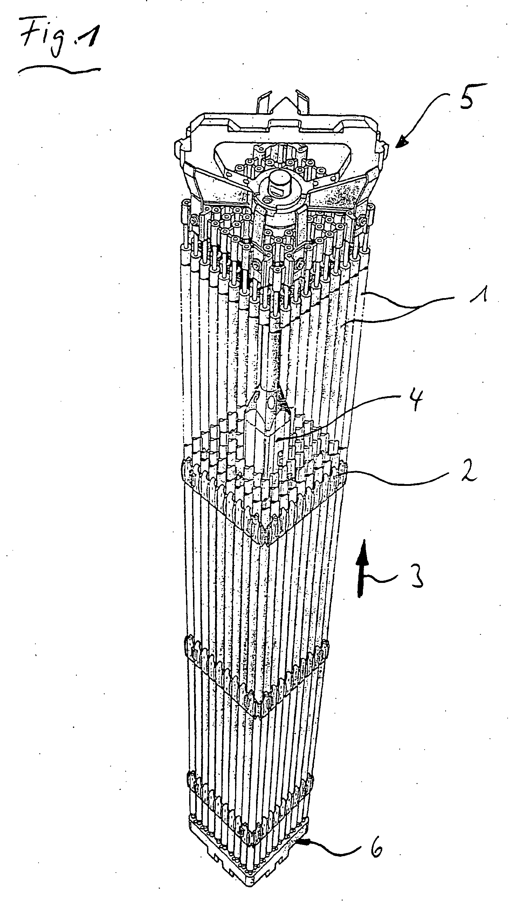

Fig. 1 zeigt ein Brennelement eines Siedewasserreaktors, das ein Bündel aus einer Vielzahl von mit Brennstoff gefüllten Brennstäben 1 umfasst. Die Brennstäbe sind durch mehrere in verschiedenen Axialpositionen angeordnete Abstandhalter 2 lateral fixiert. In Axialrichtung 3 erstreckt sich etwa zentral im Brennstabbündel ein Wasserkanal 4. Oberseits am Brennelement ist ein Brennelementkopf 5 und unterseits ein Brennelementfuß 6 angeordnet.

Der Brennelementfuß 6 setzt sich im wesentlichen, wie beispielsweise Fig. 2 zu entnehmen ist, aus einem Rahmenteil 7 und einer Siebplatte 8 zusammen. Die Siebplatte 8 ist von einer Vielzahl von Stegen 9 gebildet, die sich zwischen zwei sich gegenüberliegenden Wänden 10, 12 des Rahmenteils 7 erstrecken. Quer zu ihrer Längsrichtung sind die Stege 9 mit Abstand zueinander angeordnet. In der gleichen Richtung sind sie durch an sie angeformte Streben 13 miteinander verbunden.

Die Siebplatte 8 ist an einer exzentrischen Position von einer Öffnung 14 durchsetzt. Die Innenquerschnittsfläche der Öffnung 14 ist achteckig ausgebildet. Genauer gesprochen liegen die die Öffnung 14 definierenden Ränder 15 der Stege 9 an einem gedachten Zylinder mit achteckigem Umriss an. Zur Fixierung am Brennelementfuß 6 ist am unteren Ende des Wasserkanals 4 ein von einer Gewindebohrung 16 durchsetzter Stopfen 17 angeordnet. Von der der Siebplatte 8 im Montagezustand zugewandten Unterseite 18 des Stopfens 17 steht eine die Gewindebohrung 16 umfassende Schürze 19 in Axialrichtung 3 vor. Die Außenumfangsfläche der Schürze 19 bildet einen achteckigen Zylindermantel und erstreckt sich in die komplementär ausgestaltete Öffnung 14 der Siebplatte 8 drehfest hinein. Der Stopfen 17 selbst hat eine etwa quadratische Umrissform. Die die Unterseite 18 des Stopfens 17 begrenzenden Kanten 20 sind abgeschrägt.

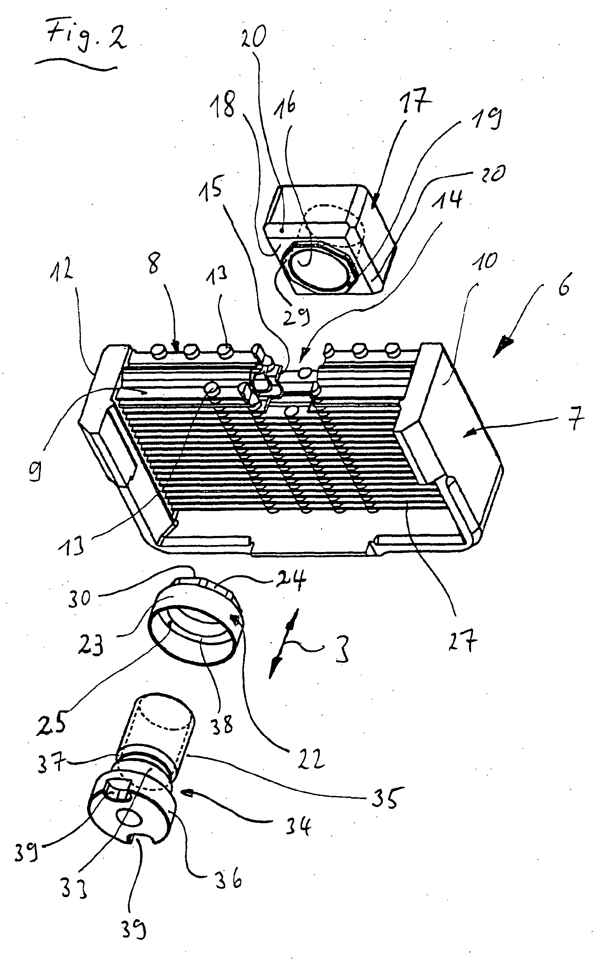

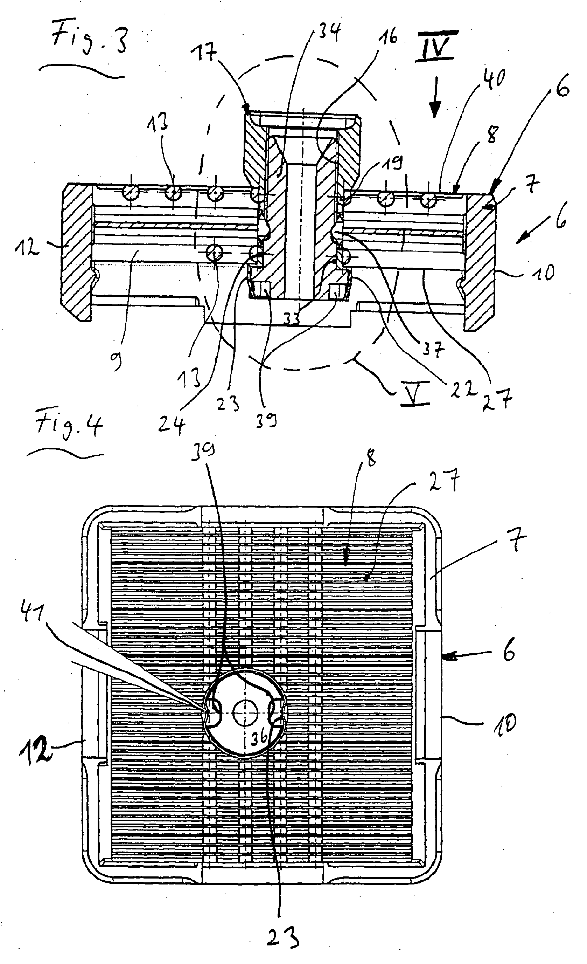

Zur Fixierung des Stopfens 17 bzw. des Wasserkanals 4 ist weiterhin eine Buchse 22 vorgesehen, die sich in einen ersten und einen zweiten Längsabschnitt 23, 24 untergliedert. Zwischen den beiden Längsabschnitten ist eine Radialschulter 25 angeordnet, wie am besten in Fig. 6 zu sehen ist. Der erste Längsabschnitt 23 ist kreisringförmig ausgebildet und hat einen größeren Durchmesser als der einen achteckigen, zur Öffnung 14 komplementären Umriss aufweisende zweite Längsabschnitt 24. Dieser erstreckt sich im Montagezustand (Fig. 3, 5, 6) in die Öffnung 14 drehfest hinein. Die Buchse 22 liegt dabei mit der Außenseite 26 der Radialschulter 25 an der Unterseite 27 der Siebplatte 8 bzw. der sie bildenden Stege 9 an. Die Länge der Schürze 19 und des zweiten Längsabschnittes 24 der Buchse 22 ist jeweils so bemessen, dass ihre Summe kleiner ist als die Dicke 28 (Fig. 5) der Siebplatte 8 bzw. die Höhe der sie bildenden Stege 9. Zwischen den einander zugewandten Stirnseiten 29, 30 von Schürze 19 und Buchse 22 ist daher ein Axialabstand 32 vorhanden.

Zur Fixierung des Wasserkanals 4 ist weiterhin eine Schraube 34 mit einem Gewindebolzen 35 und einem Kopf 36 vorgesehen, wobei sich der Gewindebolzen 35 durch die Buchse 22 hindurch und in die Gewindebohrung 16 des Stopfens 17 hineinerstreckt. Der Gewindebolzen 35 weist einen gewindefreien Bund 33 auf, der sich vom Kopf 36 axial wegerstreckt. Zwischen dem Bund 33 und dem ein Gewinde aufweisenden Abschnitt des Gewindebolzens 35 ist ein Einstich 37 vorhanden. Der Kopf 36 stützt sich an der Innenseite 38 der Radialschulter 25 ab. Im verspannten Zustand wird dadurch die Buchse 22 mit der Außenseite 26 der Radialschulter gegen die Unterseite 27 der Siebplatte 8 gedrückt. Der Stopfen 17 ist dabei mit seiner Unterseite 18 gegen die Oberseite 40 der Siebplatte gepresst.

Der Brennelementfuß 6, die Buchse 22 und die Schraube 34 sind aus Austhenit gefertigt. Der Wasserkasten sowie der ihn unterseits abschließende Stopfen 17 dagegen aus Zirkaloy. Der erste Längsabschnitt 23 der Buchse 22 weist eine Wandstärke auf, die eine radial nach innen gerichtete Verformung 41 zulässt. Wie Fig. 3 und 4 entnehmbar ist, sind zwei solcher Verformungen 41 an diametral gegenüberliegenden Stellen des ersten Längsabschnittes 23 vorgenommen worden. Die Verformungen 41 erstrecken sich in zwei sich diametral gegenüberliegenden Nuten 39 des Kopfes 36 hinein. Die Schraube 34 ist dadurch gegenüber der Buchse 22 drehfixiert. Diese wiederum liegt drehfixiert in der Öffnung 14 ein. Ein selbsttätiges Lösen der Schraube 34 ist dadurch verhindert.

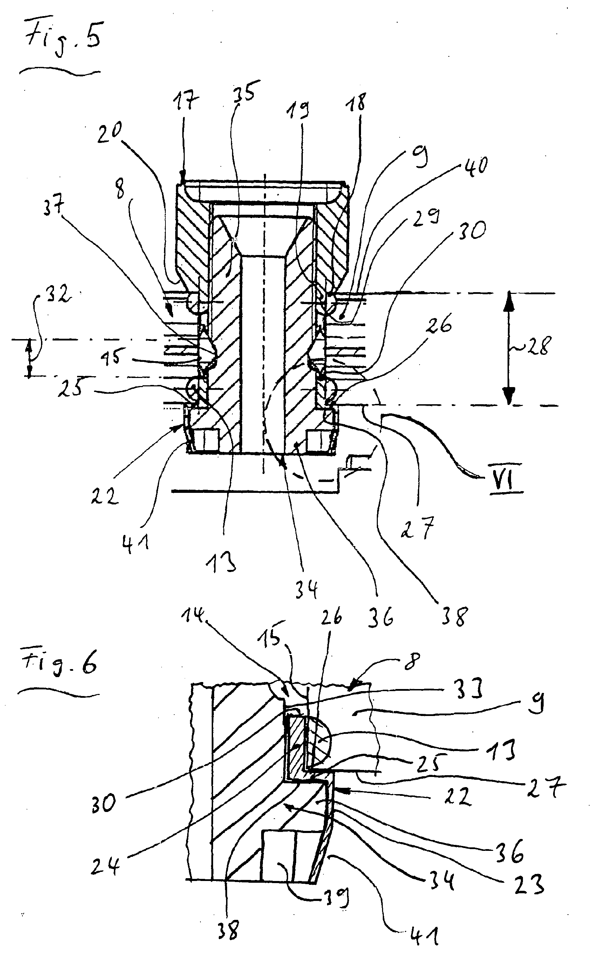

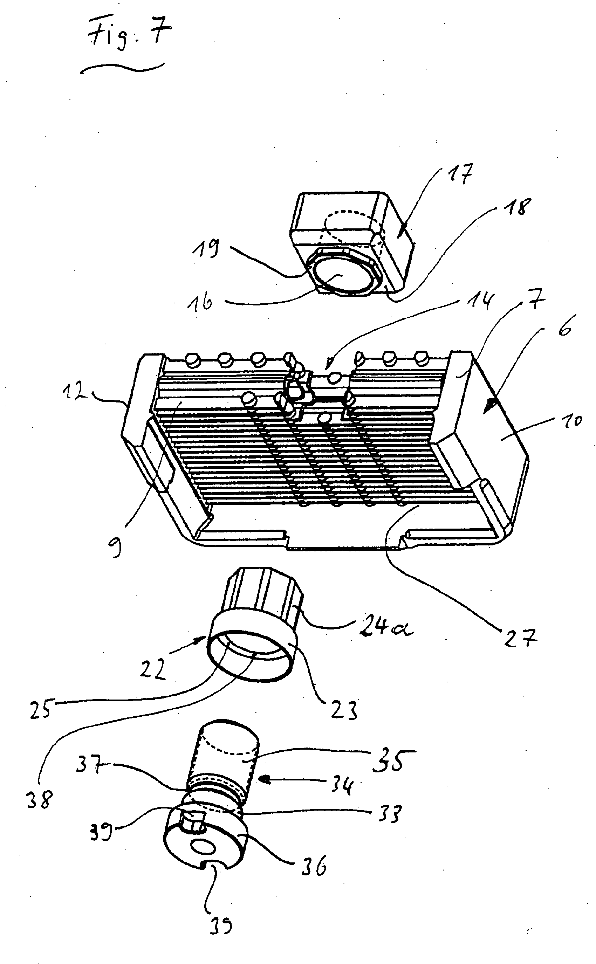

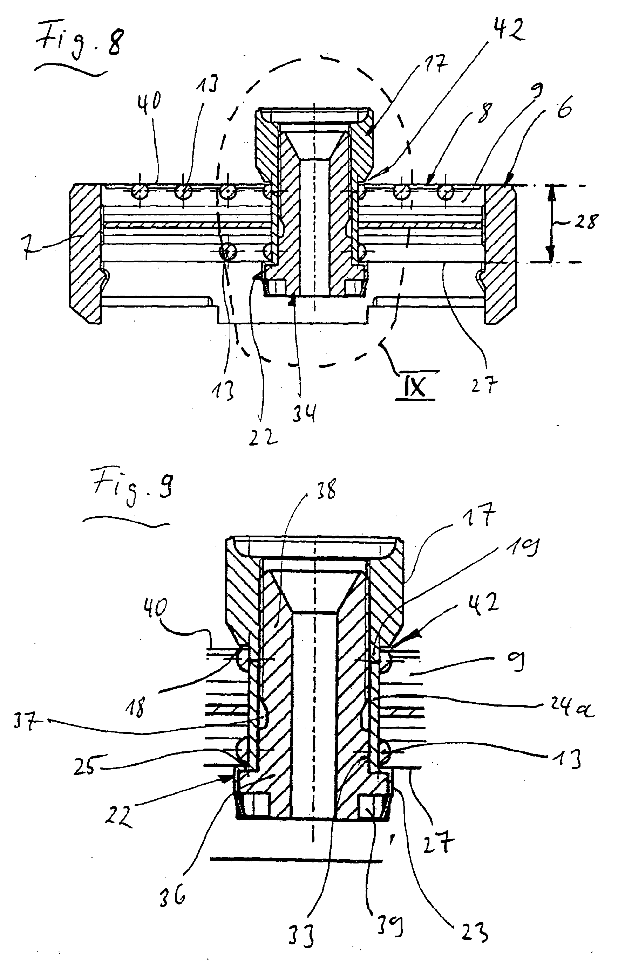

Das in Fig. 7-9 dargestellte Ausführungsbeispiel unterscheidet sich von dem oben beschriebenen lediglich dadurch, dass der Längsabschnitt 24a der Buchse 22 länger ist, wobei die Länge dieses Abschnitts und die Länge der Schürze 19 so bemessen sind, dass ihre Summe größer ist als die Dicke 28 der Siebplatte 8. Dadurch ist zwischen der Oberseite 40 der Siebplatte 8 und der Unterseite 18 des Stopfens 17 ein Spalt 42 gebildet. Beim Verspannen stützt sich daher der Stopfen 17 nicht an der Oberseite 40 der Siebplatte 8 sondern an der Buchse 22 ab. Dadurch besteht keine Gefahr, dass die in Axialrichtung 3 gewellten Stege 9 in dieser Richtung federnd nachgeben. Dies hätte zur Folge, dass zum Aufbringen der erforderlichen Vorspannkraft unter Umständen eine nicht erwünschte Verformung der Stege in Axialrichtung erfolgen würde.

### Bezugszeichenliste

- 1: Brennstab
- 2: Abstandhalter
- 3: Axialrichtung
- 4: Wasserkanal
- 5: Brennelementkopf
- 6: Brennelementfuß
- 7: Rahmenteil
- 8: Siebplatte
- 9: Steg
- 10: Wand
- 12: Rand
- 13: Strebe
- 14: Öffnung
- 15: Rand
- 16: Gewindebohrung
- 17: Stopfen
- 18: Unterseite
- 19: Schürze
- 20: Kante
- 22: Buchse
- 23: erster Längsabschnitt
- 24: zweiter Längsabschnitt
- 25: Radialschulter
- 26: Außenseite
- 27: Unterseite
- 28: Dicke
- 29: Stirnseite
- 30: Stirnseite
- 32: Axialabstand
- 33: Bund
- 34: Schraube
- 35: Gewindebolzen
- 36: Kopf
- 37: Einstich
- 38: Innenseite
- 39: Nut
- 40: Oberseite
- 41: Verformung
- 42: Spalt

## Patentansprüche

1. Brennelement für einen Siedewasserreaktor, mit einem Wasserkanal (4) und einem Brennelementfuß (6), der aus einer Siebplatte (8) und einem diese umfassenden Rahmenteil (7) gebildet ist, wobei der Wasserkanal (4) an seinem unteren Ende einen von einer Bohrung (16) durchsetzten Stopfen (17) trägt, an dem der Brennelementfuß (6) fixiert ist,
**gekennzeichnet durch**
folgende weitere Ausgestaltung:
- die Siebplatte (8) ist von einer Öffnung (14) durchsetzt,
- an einer Unterseite (18) des Stopfens (17) ist eine die Bohrung (16) umfassende Schürze (19) angeformt, die sich in die Öffnung (14) der Siebplatte (8) hinein erstreckt,
- es ist eine Buchse (22) mit einem ersten und einem zweiten Längsabschnitt (23, 24) vorgesehen, wobei der erste Längsabschnitt (23) von der Unterseite (27) der Siebplatte (8) her in die Öffnung (14) drehfest hineinragt und eine zwischen den beiden Abschnitten (23, 24) vorhandene Radialschulter (25) an einer Unterseite (27) der Siebplatte (8) anliegt,
- die Buchse (22) ist von dem Gewindebolzen (35) einer Schraube (34) durchgriffen, der in ein Gewinde der Bohrung (16) des Stopfens (17) eingreift.

2. Brennelement nach Anspruch 1,
**dadurch gekennzeichnet,**
**dass** die Schürze (19) eine polygone Umrissform besitzt und ein die Schürze (19) umfassender Bereich der Siebplatten-Öffnung (14) eine dazu komplementäre Querschnittsfläche aufweist.

3. Brennelement nach Anspruch 1 oder 2,
**dadurch gekennzeichnet,**
**dass** die einander zugewandten Stirnseiten (29, 30) des zweiten Längsabschnitts (24) der Buchse und der Schürze (19) aneinander anliegen, wobei die Längen von Buchse (22) und Schürze (19) so bemessen sind, dass zwischen der Unterseite (18) des Stopfens (17) und einer Oberseite (40) der Siebplatte (8) ein Spalt (42) vorhanden ist.

4. Brennelement nach Anspruch 1, 2 oder 3,
**dadurch gekennzeichnet,**
**dass** die Buchse (22) drehfest in der Öffnung (14) angeordnet und die Schraube (34) drehfest mit der Buchse (22) verbunden ist.

5. Brennelement nach Anspruch 4,
**dadurch gekennzeichnet,**
**dass** der zweite Längsabschnitt (24) der Buchse (22) eine polygone Umrissform besitzt und ein die Buchse (22) umfassender Bereich der Siebplatten-Öffnung (14) eine dazu komplementäre Querschnittsfläche aufweist,
und **dass** ein Umfangsbereich des ersten Längsabschnitts (23) durch eine radial nach innen gerichtete plastische Verformung (41) drehmomentschlüssig mit dem Kopf (36) der Schraube (34) zusammenwirkt.

6. Brennelement nach einem der vorhergehenden Ansprüche,
**dadurch gekennzeichnet,**
**dass** der Gewindebolzen (35) einen sich vom Kopf (36) weg erstreckenden gewindefreien Bund (33) aufweist, der mit seiner Außenumfangsfläche an der Innenfläche des ersten Längsabschnitts (23) der Buchse anliegt.

## Claims

1. Fuel assembly for a boiling water reactor, having a water passage (4) and a fuel assembly bottom fitting (6) formed by a sieve plate (8) and a frame part (7) surrounding the latter, wherein the water passage (4) carries, at its lower end, a stopper (17), through which a bore (16) passes and which is attached to the fuel assembly bottom fitting (6), **characterized by** the following further refinement:
- an opening (14) passes through the sieve plate (8),
- a skirt (19) surrounding the bore (16) is integrally formed on an underside (18) of the stopper (17) and extends into the opening (14) in the sieve plate (8),
- a bush (22) having a first and a second longitudinal section (23, 24) is provided, wherein the first longitudinal section (23) projects from the underside (27) of the sieve plate (8) into the opening (14) in a rotationally-fixed manner and a radial shoulder (25) located between the two sections (23, 24) bears against an underside (27) of the sieve plate (8),
- the threaded bolt (35) of a screw (34) passes through the bush (22) and engages in a thread of the bore (16) of the stopper (17).

2. Fuel assembly according to Claim 1, **characterized in that** the skirt (19) has a polygonal contour and a region, surrounding the skirt (19), of the screen-plate opening (14) has a cross-sectional area complementary thereto.

3. Fuel assembly according to Claim 1 or 2, **characterized in that** the mutually facing end faces (29, 30) of the second longitudinal section (24) of the bush and of the skirt (19) bear against one another, wherein the lengths of bush (22) and skirt (19) are such that there is a gap (42) between the underside (18) of the stopper (17) and an upper side (40) of the sieve plate (8).

4. Fuel assembly according to Claim 1, 2 or 3, **characterized in that** the bush (22) is arranged in the opening (14) in a rotationally-fixed manner and the screw (34) is connected to the bush (22) in a rotationally-fixed manner.

5. Fuel assembly according to Claim 4, **characterized in that** the second longitudinal section (24) of the bush (22) has a polygonal contour and a region, surrounding the bush (22), of the screen-plate opening (14) has a cross-sectional area complementary thereto, and **in that** a circumferential region of the first longitudinal section (23) interacts with the head (36) of the screw (34) in a torque-locking manner on account of a radially inwardly facing plastic deformation (41).

6. Fuel assembly according to one of the preceding claims, **characterized in that** the threaded bolt (35) has a thread-free collar (33), which extends away from the head (36) and bears against the inner face of the first longitudinal section (23) of the bush by its outer circumferential face.

## Revendications

1. Assemblage combustible pour un réacteur à eau bouillante, comprenant un canal d'eau (4) et un pied d'élément combustible (6) qui est formé d'une plaque tamis (8) entourée d'une partie de cadre (7), le canal d'eau (4) portant à son extrémité inférieure un bouchon (17), qui est traversé par un alésage (16) et sur lequel est fixé le pied d'élément combustible (6),
**caractérisé par**
le mode de réalisation supplémentaire suivant :
- la plaque tamis (8) est traversée par un orifice (14),
- sur un côté inférieur (18) du bouchon (17) est formée une jupe (19) entourant l'alésage (16) et s'étendant dans l'orifice (14) de la plaque tamis (8),
- il est prévu une douille (22) ayant un premier et un deuxième tronçon longitudinal (23, 24), le premier tronçon longitudinal (23) faisant saillie, bloqué en rotation, dans l'orifice (14) depuis le côté inférieur (27) de la plaque tamis (8), et un épaulement radial (25) présent entre les deux tronçons (23, 24) s'appuyant sur un côté inférieur (27) de la plaque tamis (8),
- la douille (22) est pénétrée par l'axe fileté (35) d'une vis (34), l'axe engrenant dans un taraudage de l'alésage (16) du bouchon (17).

2. Elément combustible selon la revendication 1,
**caractérisé en ce que**
la jupe (19) a un contour polygonal, et **en ce qu'**une zone de l'orifice (14) de la plaque tamis englobant la jupe (19) a une aire de la section qui en est complémentaire.

3. Elément combustible selon la revendication 1 ou 2,
**caractérisé en ce que**
les côtés frontaux (29, 30), tournés l'un vers l'autre, du deuxième tronçon longitudinal (24) de la douille et de la jupe (19) sont contigus l'un à l'autre, les longueurs de la douille (22) et de la jupe (19) étant telles qu'il y a un interstice (42) entre le côté inférieur (18) du bouchon (17) et le côté supérieur (40) de la plaque tamis (8).

4. Elément combustible selon la revendication 1, 2 ou 3,
**caractérisé en ce que**
la douille (22) est disposée, bloquée en rotation, dans l'orifice (14), et la vis (34) est solidaire en rotation de la douille (22).

5. Elément combustible selon la revendication 4,
**caractérisé en ce que**
le deuxième tronçon longitudinal (24) de la douille (22) a un contour polygonal, et **en ce qu'**une zone de l'orifice (14) de la plaque tamis englobant la douille (22) a une aire de la section qui en est complémentaire,
et **en ce qu'**une zone de pourtour du premier tronçon longitudinal (23) coopère, par une déformation (41) plastique dirigée vers l'intérieur dans le sens radial, en friction de couple, avec la tête (36) de la vis (34).

6. Elément combustible selon l'une des revendications précédentes,
**caractérisé en ce que**
l'axe fileté (35) a un collet (33), exempt de filet et s'étendant en s'éloignant de la tête (36), qui appuie par sa surface de pourtour extérieure sur la surface intérieure du premier tronçon longitudinal (23) de la douille.
